# FASCICULE DE BREVET EUROPEEN

(11) **EP 0 459 886 B1**
(45) Date de publication et mention de la délivrance du brevet: **12.07.1995**
(21) Numéro de dépôt: 91401365.1
(22) Date de dépôt: 28.05.1991
(51) Int. Cl.: G01S 7/06, G01S 15/89, G01S 13/32, F41G 7/22

(54) **Dispositif de mesure de la distance à une piste pour un engin volant**
Vorrichtung zur Messung der Entfernung zu einer Rollbahn für einen Flugkörper
Distance-to-runway measuring device for a flying object

(30) Priorité: 01.06.1990 FR 9006878
(43) Date de publication de la demande: 04.12.1991
(73) Titulaire: THOMSON-TRT DEFENSE, 78280 Guyancourt (FR)
(72) Inventeur: Avignon, Bruno, F-92045 Paris la Défense (FR); Canal, Yves, F-92045 Paris la Défense (FR)
(74) Mandataire: Chaverneff, Vladimir

(56) Documents cités:
- EP-A- 0 322 005
- IEEE TRANSACTIONS ON GEOSCIENCE AND REMOTE SENSING vol. GE-25, no. 3, Mai 1987,NEW YORK US pages 393 - 401; L.S. FEDOR ET AL.: 'Observation of sea ice using the 36 Ghz surface contour radar '
- PROCEEDINGS OF IGARSS '86, vol. III, Septembre 1986, ZURICH CH pages 1331 -1337; H.D. GRIFFITHS ET AL.: 'Techniques for providing high spatial resolution from radar altimeters '
- PROCEEDINGS OF THE IEEE vol. 70, no. 12, Décembre 1982, NEW YORK US pages 1410- 1428; F.T. ULABY: 'Radar signatures of terrain: useful monitors of renewable resources '

## Description

La présente invention se rapporte à un dispositif de mesure de la distance à une piste pour un engin volant, selon le préambule de la revendication 1.

Pour détruire, au moins partiellement, une piste d'aviation, on a généralement recours à deux techniques différentes. La première consiste à larguer des bombes à partir d'un bombardier, mais pour obtenir une certaine efficacité, il faut larguer un grand nombre de bombes, car il est très difficile au pilote, même expérimenté, de déterminer avec une précision suffisante l'instant de largage approprié. La second technique consiste à envoyer un missile guidé, mais elle est complexe à mettre en oeuvre et onéreuse.

On connaît d'après le document EP-A-0 322 005 un dispositif de cartographie radioélectrique ne permettant pas de repérer une piste, ni de mesurer simplement la distance à l'axe de cette piste le long de la trajectoire de l'engin volant portant ce dispositif. On connaît d'après le document "Proceedings of the IEEE, vol. 70, Dec.82, N°12, pages 1410-1428" des procédés de discrimination par ondes radar de différents sols, mais il n'y est pas question de mesures de distances.

La présente invention a pour objet un dispositif de mesure de la distance à une piste pour un engin volant qui donne une mesure la plus précise possible, et qui soit le moins onéreux possible et très facile à mettre en oeuvre.

Le dispositif de mesure conforme à l'invention, qui réalise automatiquement la mesure de la distance à une piste d'aviation pour un engin volant tournant autour de son axe, comporte un émetteur-récepteur radar embarqué émettant à une longueur d'onde permettant d'obtenir des échos du sol bordant la piste sans obtenir des échos de la piste,
- au moins une antenne, dépointée par rapport audit axe de l'engin volant, reliée à l'émetteur-récepteur radar,
- des moyens d'analyse des échos et de seuillage des échos reçus du sol bordant la piste, l'analyse des échos étant effectuée par zones rectangulaires sensiblement parallèles entre elles et à l'axe de la piste.

Selon un mode de réalisation préféré de l'invention, le dispositif de mesure de distance est caractérisé en ce que les moyens d'analyse et de discrimination comportent :
- des portes de distance
- des circuits de seuillage seuillant les signaux issus des portes de distance,
   et en ce qu'il comporte en outre :
- un circuit de calcul calculant la distance à la piste en fonction des signaux de sortie des circuits de seuillage
- un dispositif de déclenchement de largage de munitions relié à la sortie du circuit de calcul.

La présente invention sera mieux comprise à la lecture de la description détaillée d'un mode de réalisation, pris à titre d'exemple non limitatif, et illustré par le dessin annexé, sur lequel :
- les figures 1 à 3 sont des diagrammes simplifiés permettant d'expliquer le fonctionnement du dispositif de l'invention ;
- la figure 4 est un bloc-diagramme du dispositif de l'invention, et
- les figures 5 et 6 sont des diagrammes de signaux relevés dans le dispositif de l'invention.

Dans l'exemple décrit ci-dessous, le dispositif de mesure de l'invention est implanté dans une bombe-cargo, mais il est bien entendu que l'invention n'est pas limitée à une telle application, et que ce dispositif de mesure peut être implanté dans divers autres engins volants de destruction de pistes tels que des roquettes ou des missiles.

La bombe-cargo portant le dispositif de mesure de l'invention est du type à conteneur cylindrique à ailettes renfermant des "sous-munitions" explosives appropriées à la destruction de cibles telles que des pistes d'aviation. Cette bombe est larguée d'un avion transporteur à une altitude généralement inférieure à 1 Km. Au largage, un dispositif approprié imprime à la bombe une rotation autour de l'axe longitudinal de cette bombe.

Dans le cas général d'un engin volant, il faut qu'au moins la partie de cet engin supportant la (ou les) antenne(s) du dispositif de mesure de l'invention tourne autour de l'axe de roulis de cet engin. Dans tous les cas, le lancement de cet engin ne se fait que lorsque l'on sait qu'une piste existe et sera survolée par cet engin, ou se trouve sur sa trajectoire.

Pour obtenir la meilleure efficacité de destruction de la piste par les sous-munitions, l'angle "d'attaque" de la bombe (c'est à dire l'angle formé, en projection sur le sol, entre la trajectoire de la bombe et l'axe de la piste à détruire), doit être inférieur à 90° et supérieur à environ 10°, et la distance de largage (distance, mesurée au sol, le long de la trajectoire de la bombe, entre la verticale du lieu de largage des sous-munitions et l'axe de la piste) doit avoir une valeur bien déterminée, en général inférieure à environ 1 Km.

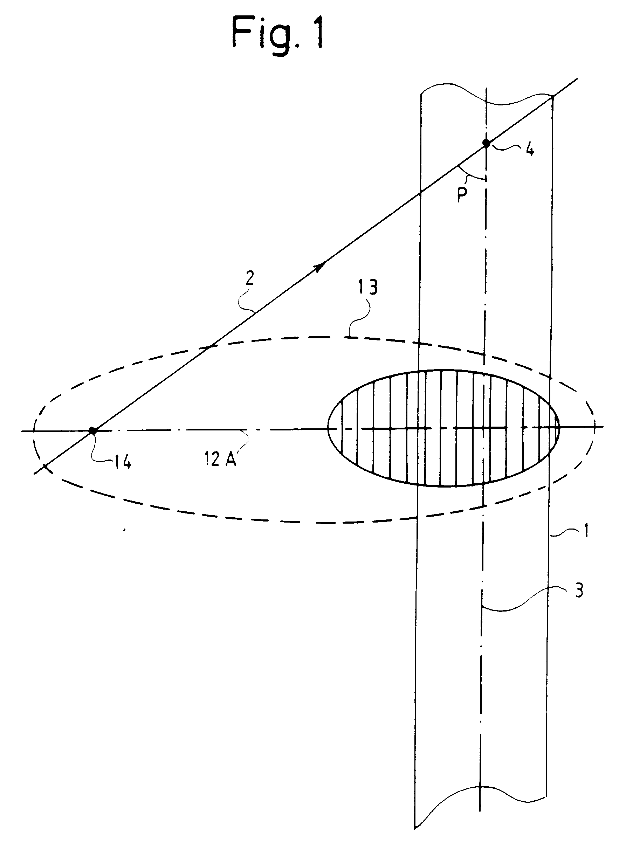

Sur la figure 1, on a représenté une portion 1 de la piste à détruire, et la projection 2, sur le sol, de la trajectoire de la bombe-cargo. L'axe de la piste 1 est référencé 3 ; et son intersection avec la droite 2 est référencée 4. L'angle P formé par la droite 2 et l'axe 3 est dit "angle d'attaque" de la piste. Pour une efficacité maximale de destruction, le point 4 doit être situé sur une portion centrale de la piste 1, et les sous-munitions doivent atterrir le plus près possible du point 4.

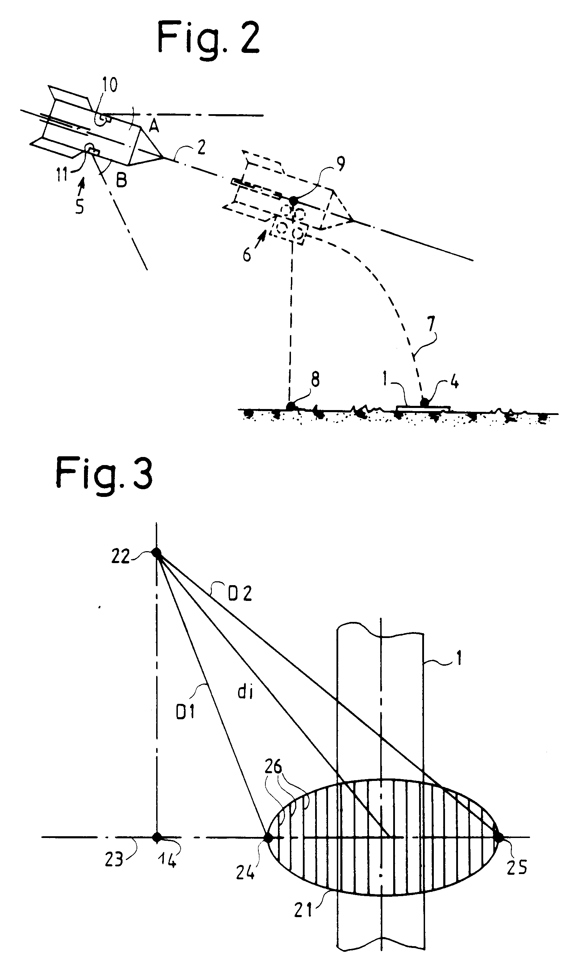

Sur le diagramme de la figure 2, dont le plan est celui du plan vertical contenant la trajectoire 2, on a représenté en 5 la bombe-cargo peu avant le largage de ses sous-munitions, et en 6, en traits interrompus, cette même bombe juste au moment du largage de ses sous-munitions. La trajectoire 2 se confond ici avec l'axe de roulis de la bombe. La courbe 7 en trait interrompu représente la trajectoire des sous-munitions depuis leur largage jusqu'à leur arrivée au sol. On suppose pour cette figure que la trajectoire 7 aboutit au point 4, c'est à dire que le déclenchement du largage a eu lieu au bon moment. On a référencé 8 le point du sol qui est à la verticale du lieu de largage 9. Dans la plupart des cas, la distance entre les points 8 et 4 est inférieure à 1 Km, et cette distance est constante pour un même type de bombe-cargo lâchée dans des conditions semblables (vitesse de l'avion porteur et altitude de largage pouvant varier à l'intérieur d'une fourchette de valeurs).

Dans le cas présent, la hauteur de largage (segment 8-9) peut varier entre 100 et 1000 m environ.

La bombe 5 est munie d'au moins une antenne radar dépointée. Dans le cas présent, elle en comporte deux, référencées 10 et 11, dépointées selon des angles différents. Dans le présent exemple, l'angle A de dépointage de l'antenne 10 est d'environ 35°, et l'angle B de dépointage de l'antenne 11 est d'environ 55°, ceci afin de pouvoir obtenir des informations quel que soit l'angle d'attaque de la piste(dans certaines limites). L'angle d'ouverture du faisceau conique (c'est à dire à section droite circulaire) de ces deux antennes est variable selon les applications. Sa valeur typique est d'environ 10 à 30°. Dans le cas présent, il est d'environ 10°. Ces deux antennes sont dirigées vers l'avant de la bombe, et sont diamétralement opposées. Selon une variante avantageuse de l'invention, les antennes 10 et 11 émettent chacune un faisceau non pas conique mais aplati à section oblongue ou ellipsoidale, le grand axe de cette section (correspondant à une ouverture du faisceau d'environ 90°) formant avec l'axe longitudinal (axe de roulis)de la bombe un angle sensiblement égal à l'angle de dépointage B de l'antenne.

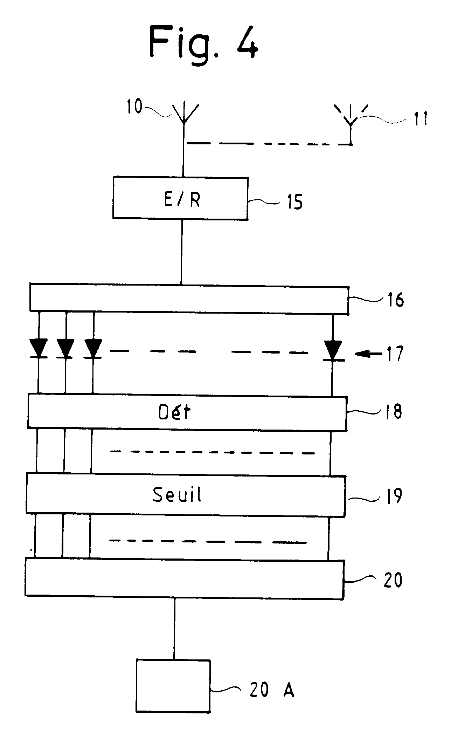

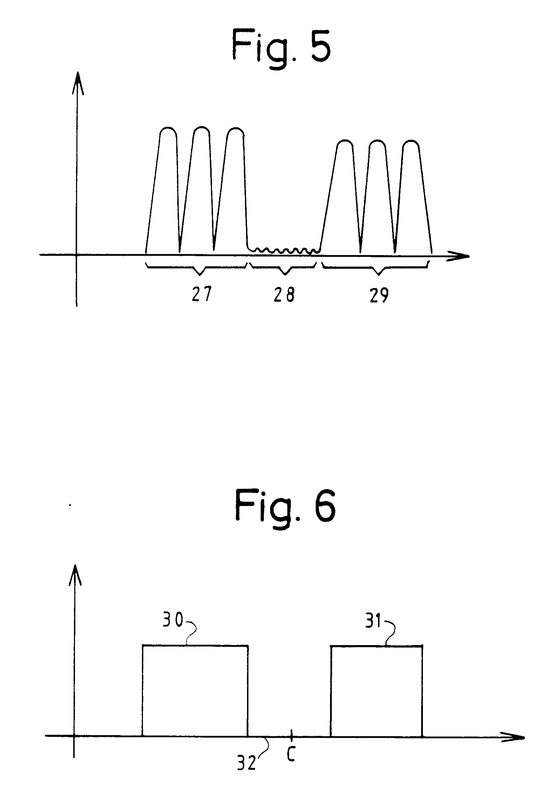

Grâce au fait que la bombe tourne autour de son axe de roulis, le faisceau radar émis par chacune de ses antennes tourne donc aussi autour de cet axe. Dans le cas d'un faisceau conique, la "tache" qu'il forme sur le sol est soit une hyperbole (lorsque le faisceau forme avec le sol un angle faible, mais ce cas n'est d'aucun intérêt ici) soit une ellipse telle que l'ellipse 12 représentée en figure 1. Du fait de ladite rotation de la bombe autour de son axe de roulis, le grand axe de l'ellipse, lorsqu'elle existe, forme un angle variable avec l'axe 3 de la piste. Dans le cas représenté en figure 1, la position de l'antenne est telle que le grand axe de cette ellipse est pratiquement perpendiculaire à l'axe 3 de la piste 1. Pour obtenir un résultat exploitable (de la façon expliquée ci-dessous en référence aux figures 4 et 5), il faut que le grand axe 12A de cette tache 12, soit perpendiculaire à l'axe 3 de la piste.Dans le cas où le faisceau radar a une section oblongue, on obtient une tache telle que la tache 13 (en trait interrompu) qui englobe à la fois la piste et un point 14 qui est à la verticale de la bombe au moment où est produite cette tache 13, qui sert à mesurer l'altitude de la bombe à cet instant.

Le phénomène physique sur lequel est basée la mesure réalisée conformément à l'invention est la différence de réflexion d'ondes radar ayant une certaine longueur d'onde due à des sols de granulométries différentes. En effet, la granulométrie des produits utilisés pour la construction de pistes d'aviation est généralement inférieure à 1cm, alors que la granulométrie du sol avoisinant est supérieure à cette valeur. Ainsi, si la longueur d'onde des ondes radars est de l'ordre de quelques centimètres, ces ondes sont réfléchies par le sol avoisinant la piste et ne sont pas réfléchies par la piste.

Le dispositif de mesure de l'invention, schématiquement représenté en figure 4, comprend essentiellement : un émetteur-récepteur radar 15 relié aux antennes 10 et 11, un générateur 16 à balayage de fréquence, des portes de distance 17 (batterie de filtres de bande accordés à des fréquences différentes proches les unes des autres, et permettant, de façon connue en soi, de déterminer des distances de cibles réfléchissantes), un détecteur 18 mesurant le niveau de sortie de chacune des portes de l'ensemble 17, un dispositif 19 à seuil, et un circuit 20 de traitement de signal et de calcul, dont la sortie est reliée à un dispositif 20A de déclenchement de largage des sous-munitions.

On a représenté en figure 3 une ellispe 21 similaire à l'ellipse 12, et on a figuré par un point 22 l'antenne radar correspondante (10 ou 11). Le grand axe de l'ellipse 21 est référencé 23. Les intersections de l'ellipse 21 avec son axe 23 sont référencées 24 et 25. La distance entre l'antenne 22 et le point 24 est référencée D1, et celle entre l'antenne 22 et le point 25 est référencée D2, le point 25 étant le plus éloigné de l'antenne 22. La distance entre l'antenne 22 et n'importe quel point à l'intérieur de l'ellipse 21 est comprise entre D1 et D2. On a tracé à l'intérieur de l'ellipse 21 des lignes 26, équidistantes entre elles, d'isodistances par rapport à l'antenne 22. Etant donné que l'ellipse 21 est très allongée, ces lignes d'isodistances sont presque des droites, perpendiculaires à son grand axe. La distance radiale de l'antenne 22 aux bandes délimitées par ces lignes est référencée di. On règle les fréquences centrales des différents filtres 17 pour que les différentes lignes 26, correspondant aux frontières entre les bandes de ces filtres, soient sensiblement équidistantes, avec un pas compris entre 2 et 10 mètres environ.

Lorsque l'antenne 22 est orientée de telle façon que l'ellipse 21 recouvre la piste 1 en débordant de chaque côté, et que son grand axe est perpendiculaire à l'axe de la piste, comme représenté en figures 1 et 3, on recueille à la sortie du circuit détecteur 18 un signal tel que représenté en figure 5. Ce signal comporte une première partie 27 correspondant aux échos renvoyés par le sol bordant la piste 1 du côté du point 24. Cette partie 27 comporte une succession de pics, à raison d'un par porte de distance. La seconde partie 28 de ce signal ne comporte que du bruit, du fait que la piste 1 ne se présente pas comme une surface réfléchissante à cause de sa rugosité (la fréquence d'émission radar étant choisie de façon appropriée, comme expliqué ci-dessus). La troisième partie 29 est semblable à la partie 27, et correspond aux échos du sol bordant la piste au-delà du point 25. Bien entendu, les pics des parties 27 et 29 adjacents à la partie 28 peuvent avoir des amplitudes différentes de celles représentées sur la figure 5, selon le degré de recouvrement des bords de la piste 1 par les bandes de l'ellipse 21 délimitées par les lignes 26.

Le dispositif à seuil 19 a un seuil réglé légèrement en-dessous de l'amplitude moyenne des sommets des pics des parties 27 et 29. A la sortie du dispositif 19, on recueille un signal tel que le signal rectangulaire de la figure 6. Ce signal présente, dans le cas illustré par la figure 3, deux créneaux 30, 31 correspondant aux parties 27 et 29 du signal de la figure 5 dans la mesure où tous les sommets des pics sont au-dessus du seuil précité. L'espace 32 de valeur logique nulle entre les créneaux 30 et 31 correspond à la partie 28, et donc à la largeur d'une voie rencontrée par le faisceau radar, ce qui permet de vérifier qu'il s'agit bien d'une piste si sa largeur est suffisante.

Après plusieurs mesures ainsi effectuées, il est facile de déterminer la distance radiale Di à l'axe 3 de la piste 1 (milieu de la partie 32 entre les parties 30 et 31). Connaissant l'altitude de la bombe (mesurée soit avec un altimètre classique indépendant, soit avec l'appareillage décrit ci-dessus et équipé d'au moins une antenne produisant une tache sur le sol telle que la tache 13) lorsque le signal à la sortie du circuit 18 correspond à celui de la figure 5, c'est-à-dire que le grand axe de l'ellipse (12, 21 ou 13) est perpendiculaire à l'axe de la piste 1, il est facile de calculer la distance entre le point 14 et l'axe de la piste 1, puis la distance entre le point 14 et le point 4 en connaissant l'angle D entre les droites 2 et 23. Au bout de plusieurs mesures, il est facile de déterminer à quel instant la distance de la bombe au point 4 aura la valeur désirée (dans le présent exemple 250 mètres) pour déclencher le largage des sous-munitions. Le circuit 20 envoie au dispositif 20A de déclenchement de largage le signal approprié lorsque cette valeur désirée est atteinte.

Dans le cas où l'antenne 22 émet un faisceau produisant sur le sol une tache telle que la tache 13 (figure 1), le premier pic de la partie 27 correspond à l'altitude de l'antenne, puisqu'une altitude d'un point de l'espace par rapport au sol est la plus courte distance de ce point du sol, et que le premier pic de la partie 27 correspond à la plus courte distance entre l'antenne et le sol réflecteur. Ce cas est particulièrement avantageux du fait que la même antenne permet d'effectuer, au cours de la même émission radar, une mesure de l'altitude et une mesure de la distance radiale di à l'axe de la piste, ce qui évite de cumuler les erreurs sur ces deux mesures.

Il est bien entendu que l'antenne dépointée rotative peut être remplacée par tout dispositif permettant de produire au sol des "taches" similaires aux taches décrites ci-dessus (telles que les zones sensiblement rectangulaires délimitées par les lignes 26 en figure 3) dont l'orientation et la position peuvent varier.

## Revendications

1. Dispositif de mesure de la distance à une piste d'aviation pour un engin volant tournant autour de son axe, caractérisé en ce qu'il comporte un émetteur-récepteur radar embarqué (15) émettant à une longueur d'onde permettant d'obtenir des échos du sol bordant la piste sans obtenir des échos de la piste,
- au moins une antenne, dépointée par rapport audit axe (2) de l'engin volant, reliée à l'émetteur-récepteur radar,
- des moyens d'analyse des échos et de seuillage (16, 17, 18, 19) des échos reçus du sol bordant la piste, l'analyse des échos étant effectuée par zones rectangulaires sensiblement parallèles entre elles et à l'axe de la piste.

2. Dispositif de mesure selon la revendication 1, caractérisé en ce que la longueur d'onde de l'émission radar est de l'ordre de quelques centimètres.

3. Dispositif de mesure selon l'une des revendications précédentes, caractérisé en ce que les moyens d'analyse et de discrimination comportent :
- des portes de distance (17)
- des circuits de seuillage (19) seuillant les signaux issus des portes de distance,
et en ce qu'il comporte en outre :
- un circuit de calcul (20) calculant la distance à la piste en fonction des signaux de sortie des circuits de seuillage
- un dispositif (20A) de déclenchement de largage de munitions relié à la sortie du circuit de calcul.

4. Dispositif de mesure selon l'une des revendications précédentes, caractérisé en ce qu'il comporte deux antennes dépointées selon des angles de dépointage différents.

5. Dispositif de mesure selon le revendication 4, caractérisé en ce que les angles de dépointage sont respectivement de 35° et 55° environ.

6. Dispositif de mesure selon l'une des revendications précédentes, caractérisé en ce que l'engin volant est une bombe-cargo dont le largage des sous-munitions est déclenché par le dispositif de déclenchement (20A) lorsque la distance, mesurée au sol, de la bombe-cargo à l'axe de la piste, dans le plan de sa trajectoire, atteint une valeur déterminée.

## Patentansprüche

1. Vorrichtung zum Messen des Abstandes von einer Flugzeug-Start/Landepiste für einen sich um seine Achse drehenden Flugkörper, gekennzeichnet durch einen Bordradar-Sender/Empfänger (15), der eine Wellenlänge aussendet, die es ermöglicht, Echos von dem die Piste begrenzenden Boden zu erhalten, ohne Echos von der Piste zu erhalten,
- wenigstens eine gegenüber der Achse (2) des Flugkörpers versetzte Antenne, die an den Radar-Sender/Empfänger angeschlossen ist,
- Mittel (16, 17, 18, 19) zum Analysieren und zur Schwellenbewertung von von dem an die Piste angrenzenden Boden empfangenen Echos, wobei die Analyse der Echos mittels rechtwinkliger Zonen durchgeführt wird, die im wesentlichen parallel zueinander und zur Achse der Piste liegen.

2. Meßvorrichtung nach Anspruch 1, dadurch gekennzeichnet, daß die Radar-Sendewellenlänge in der Größenordnung einiger Zentimeter liegt.

3. Meßvorrichtung nach einem der vorhergehenden Ansprüche, dadurch gekennzeichnet, daß die Analyse- und Diskriminatormittel enthalten:
- Entfernungstore (17)
- Schwellenwertschaltungen (19) zur Schwellenbewertung der von den Entfernungstoren abgegebenen Signale, und daß sie ferner enthält:
- eine Rechenschaltung (20), die den Abstand von der Piste abhängig von den Ausgangssignalen der Schwellenwertschaltungen berechnet
- eine Vorrichtung (20A) zum Auslösen des Munitionsabwurfs, die mit dem Ausgang der Rechenschaltung verbunden ist.

4. Meßvorrichtung nach einem der vorhergehenden Ansprüche, gekennzeichnet durch zwei Antennen, die gemäß unterschiedlichen Ablagewinkeln versetzt sind.

5. Meßvorrichtung nach Anspruch 4, dadurch gekennzeichnet, daß die Ablagewinkel etwa 35° bzw. 55° betragen.

6. Meßvorrichtung nach einem der vorhergehenden Ansprüche, dadurch gekennzeichnet, daß der Flugkörper eine Lastbombe ist, bei der das Abwerfen von Teilmunitionen durch die Auslösevorrichtung (20A) ausgelöst wird, wenn der gemessene Bodenabstand der Lastbombe auf der Achse der Piste in der Ebene ihrer Flugbahn einen bestimmten Wert erreicht.

## Claims

1. Device for measuring the range to an aircraft runway for a flying machine rotating about its axis, characterized in that it includes an on-board radar transmitter-receiver (15) transmitting at a wavelength making it possible to obtain echoes from the ground bordering the runway without obtaining echoes from the runway,
- at least one antenna, aimed off with respect to the said axis (2) of the flying machine, linked to the radar transmitter-receiver,
- means of analysing the echoes and of thresholding (16, 17, 18, 19) the echoes received from the ground bordering the runway, the analysis of the echoes being performed by rectangular regions which are substantially parallel to each other and to the axis of the runway.

2. Measuring device according to Claim 1, characterized in that the wavelength of the radar transmission is of the order of a few centimetres.

3. Measuring device according to one of the preceding claims, characterized in that the analysis and discrimination means include:
- range gates (17)
- thresholding circuits (19) thresholding the signals output from the range gates, and in that it further includes:
- a calculating circuit (20) calculating the range to the runway as a function of the output signals from the thresholding circuits,
- a device (20A) for triggering the release of munitions which is linked to the output of the calculating circuit.

4. Measuring device according to one of the preceding claims, characterized in that it includes two antennae aimed off along different aiming-off angles.

5. Measuring device according to Claim 4, characterized in that the aiming-off angles are respectively of about 35° and 55°.

6. Measuring device according to one of the preceding claims, characterized in that the flying machine is a cluster bomb, in which the release of the submunitions is triggered by the triggering device (20A) when the range, measured to the ground, from the cluster bomb to the axis of the runway, in the plane of its trajectory, reaches a defined value.
